# EUROPÄISCHE PATENTSCHRIFT

(11) **EP 1 041 013 B1**
(45) Veröffentlichungstag und Bekanntmachung des Hinweises auf die Patenterteilung: **11.06.2003**
(21) Anmeldenummer: 99110214.6
(22) Anmeldetag: 26.05.1999
(51) Int. Cl.: B65D 90/62, B65D 90/66, B65G 69/18

(54) **Vorrichtung zum Betätigen eines Verschliessorganes eines Behälterauslasses**
Actuating device for a closure member of a container outlet
Dispositif d'actionnement d'un organe de fermeture pour la sortie d'un récipient

(30) Priorität: 02.02.1999 US 241406
(43) Veröffentlichungstag der Anmeldung: 04.10.2000
(73) Patentinhaber: AT Anlagetechnik AG, 3186 Düdingen (CH)
(72) Erfinder: Nussbaumer, Arthur, 3186 Düdingen (CH)
(74) Vertreter: Stocker, Kurt

(56) Entgegenhaltungen:
- EP-A- 0 045 163
- WO-A-97/08080
- US-A- 5 265 763

## Beschreibung

Die Erfindung bezieht sich auf eine Betätigungsvorrichtung zum Betätigen eines Behälterauslasses nach dem Oberbegriff des Anspruches 1.

Zum Aufbewahren, Transportieren und Austragen von Schüttgütern werden Container, bzw. Behälter oder Silos mit einer unten, angeordneten, verschliessbaren Austragsöffnung eingesetzt. Die Austragsöffnung wird jeweils von einem im Behälter angeordneten Verschliessorgan verschlossen. Um Gut aus dem Behälter ausströmen zu lassen, wird das Verschliessorgan von einer Betätigungsvorrichtung von der Austragsöffnung weg gegen das Behälterinnere bewegt. Das Verschliessorgan umfasst meist einen konischen Hut, vorzugsweise einen Kegel, der das ausströmende Gut gegen einen ringförmigen Austrittsbereich leitet. Im verschlossenen Zustand liegt das Verschliessorgan aufgrund des Eigengewichtes und des Schüttgutgewichtes von oben an der Berandung der Austragsöffnung an.

Die Betätigungsvorrichtung ist häufig nicht dem Behälter, sondern einer Entleerstation zugeordnet. Zum Abgeben von Schüttgut aus dem Behälter wird dieser auf die Entleerstation aufgesetzt oder die Entleerstation wird unter den Behälter gefahren . Anschliessend wird das Verschliessorgan von der Betätigungsvorrichtung der Entleerstation abgehoben. Eine Entleerstation mit Betätigungsvorrichtung ist beispielsweise aus der EP 045 163 bekannt.

Es hat sich nun aber gezeigt, dass die vertikale Zentrumsachse der Austragsöffnung aufgrund von Mass-Toleranzen der Behälter und/oder einer ungenauen Positionierung des Behälters auf der Austragsvorrichtung häufig nicht mit der zentralen Betätigungsachse der Betätigungsvorrichtung übereinstimmt. Dadurch trifft das kegelförmige Betätigungsende der Betätigungsvorrichtung nicht zentrisch auf den kegelförmigen Kontaktbereich des Verschliessorganes. Das Verschliessorgan wird beim Abheben gekippt, oder auf die Achse der Betätigungsvorrichtung zentriert. Dadurch kann kein rotationssymmetrischer, ringförmiger Austrittsbereich gewährleistet werden, was etwa zu einem unkontrollierbaren Ausströmverhalten führt. Beim Schliessen gelangt der Deckel schief auf die Austragsöffnung, was ein vollständiges Verschliessen verhindert.

Die erfindungsgemässe Aufgabe besteht nun darin, eine Lösung zu finden mit der eine im wesentlichen zur Austragsöffnung zentrische Bewegung des Verschliessorgans gewährleistet werden kann:

Zur Lösung der Aufgabe wird eine Betätigungsvorrichtung mit den Merkmalen des Anspruches 1 verwendet. Die abhängigen Ansprüche beschreiben alternative bzw. vorteilhafte Ausführungsvarianten.

Um eine Zentrierung des Verschliessorganes relativ zur Austragsöffnung zu gewährleisten, umfasst die Betätigungsvorrichtung eine Verschiebeeinrichtung, die eine Verschiebung des Betätigungsendes der Betätigungsvorrichtung quer zu deren zentralen Betätigungsachse ermöglicht. Die Verschiebung soll vor oder gegebenenfalls beim Anheben des Verschliessorganes, im Sinne einer selbsttätigen Zentrierung, erfolgen. Dabei sollen etwa zusammenwirkende Zentrierflächen des Betätigungsendes und des Verschliessorganes das Betätigungsende beim Anheben auf die Achse des Verschliessorganes bzw. der Austragsöffnung zentrieren. Als zusammenwirkende Zentrierflächen werden vorzugsweise aneinander angepasste kegelförmige Flächen des Verschliessorganes und des Betätigungsendes eingesetzt. Als Verschiebeeinrichtung bzw. Verschiebungsführung wird vorzugsweise eine Gleitführung quer zur Betätigungsachse vorgesehen.

Es versteht sich von selbst, dass anstelle oder ergänzend zu einer passiven Zentrierung auch eine aktive Zentriervorrichtung, insbesondere mit einer radial zwischen dem Verschliessorgan und dem Betätigungsende wirkenden Blähdichtung vorgesehen werden kann.

Die Zeichnungen erläutert die Erfindung anhand eines Ausführungsbeispieles, auf das sie aber nicht eingeschränkt ist. Dabei zeigt
- Fig. 1: eine schematische Seitenansicht einer Entleerstation und eines darüber eingezeichneten Behälters,
- Fig. 2: einen vertikalen Schnitt durch eine Betätigungsvorrichtung der Entleerstation,
- Fig. 3a: einen Ausschnitt aus Fig. 2 mit nach rechts verschobenem Betätigungsende und
- Fig. 3b: einen Ausschnitt aus Fig. 2 mit nach links verschobenem Betätigungsende.

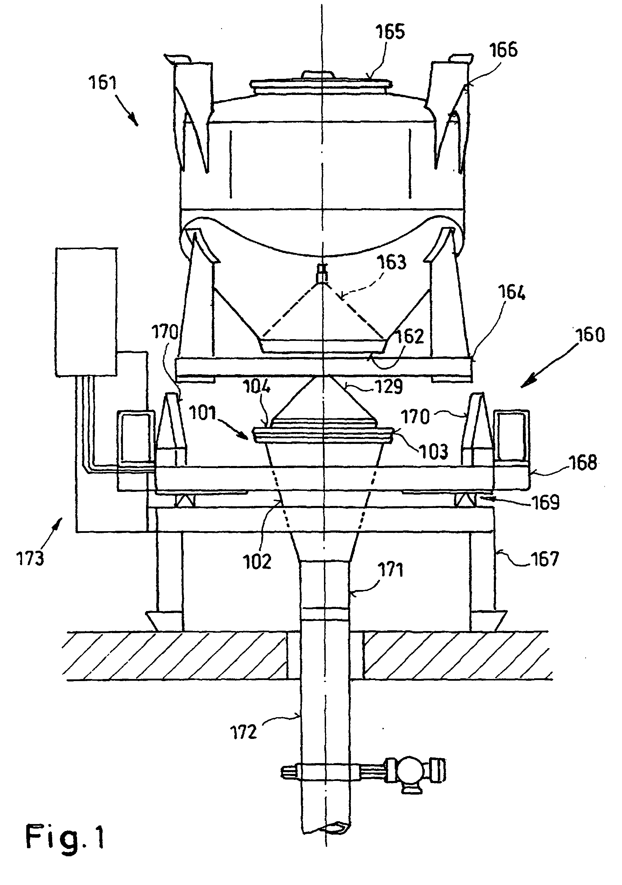

Fig. 1 zeigt eine Entleerstation 160 und darüber einen Behälter 161. Der Behälter 161 hat am unteren Ende eine Austragsöffnung 162, die von einem im Behälter 161 angeordneten kegelförmigen Verschliessorgan 163 verschlossen ist. Um den Behälter 161 stellen zu können, ist an seinem unteren Ende ein mit dem Behälter 161 verbundener Stellrahmen 164 angeordnet. Im Bereich des oberen Behälterendes ist eine verschliessbare Befüllöffnung 165 ausgebildet und vorzugsweise sind auch Auflagehalter 166 angeordnet, die zum Tragen eines Stellrahmens 164 dienen und somit ein Stapeln von Behältern ermöglichen.

Die Entleerstation 160 umfasst ein erstes am Boden aufliegendes, vorzugsweise verschiebbares, Gestell 167 und darüber ein zweites Gestell 168, wobei zwischen diesen beiden Gestellen vorzugsweise eine Wiegevorrichtung 169 ausgebildet ist. Um ein möglichst zentriertes Aufsetzen des Behälters 161 auf der Entleerstation zu ermöglichen, sind dem Stellrahmen 164 des Behälters 161 Rahmenführungen 170 des zweiten Gestelles 168 zugeordnet. Es versteht sich von selbst, dass auch andere beim Aufsetzen zentrierende Anordnungen eingesetzt werden können. Insbesondere könnte auch der Behälter selbst bzw. dessen konisch geformte Aussenbereich als Teil einer zentrierenden Führungsanordnung verwendet werden. Die Entleerstation umfasst eine mit dem zweiten Gestell 168 verbundene Auslassvorrichtung 101 mit einem kegelmantelförmigen Führungsteil 102. Am oberen Ende des Führungsteiles 102 sind Anschlusslippen 103 zum Anschliessen an den Anschlussbereich des Behälters 161 ausgebildet. Zumindest der radial nach innen stehende Lippenbereich 103a ist elastisch verformbar. Eine an einen Behälter 161 angeschlossene Auslassvorrichtung 101 macht das Verschliessorgan 163 des Behälters 161 abhebbar. Dabei ist der Austrittsöffnung 162 des Behälters 161 eine Eintrittsöffnung 104, bzw. eine obere Öffnung des Führungsteiles 102 zugeordnet, so dass bei abgehobenem Verschliessorgan 163 Schüttgut aus dem Behälter 161 in den Führungsteil 102 gelangt. Zum Heben und Senken des Verschliessorganes 163 ist eine Betätigungsvorrichtung mit einer nicht dargestellten Hubvorrichtung, insbesondere einer Kolben-Zylinder-Anordnung 105, und einem Betätigungsende in der Form einer kegelförmigen Abdeckung 129 vorgesehen. Die Auslassvorrichtung 101 ist beispielsweise über eine flexible Verbindung 171 mit einem Fallrohr 172 verbunden. Es versteht sich von selbst, dass die Auslassvorrichtung 101 auch als Teil eines Behälters oder eines Silos ausgebildet sein kann. Die Steuerungen der Wiegevorrichtung 169 und der Betätigungsvorrichtung sind in einer Steuerungs- und Anzeigevorrichtung 173 zusammengefasst.

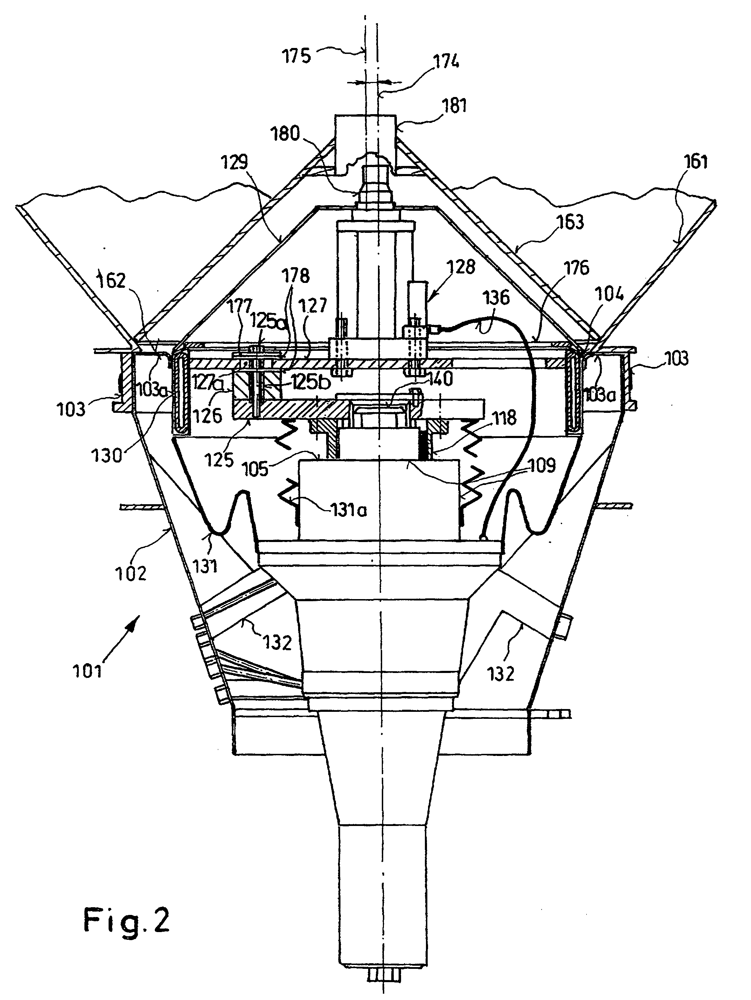

Fig. 2 zeigt die Auslassvorrichtung 101 ,und einen Ausschnitt eines darauf aufgesetzten Behälters 161 mit der Austragsöffnung 162 und dem Verschliessorgan 163. Die Kolben-Zylinder-Anordnung 105 besteht aus unbeweglichen Teilen 109, einem beweglichen Hülsenteil 118 und vorzugsweise einer Rollmembrane. Es versteht sich von selbst, dass anstelle der Kolben-Zylinder-Anordnung 105 eine andere bekannte Hubvorrichtung eingesetzt werden kann. Um die maximale Hubhöhe einstellen zu können ist gegebenenfalls eine Hubhöhen-Verstellvorrichtung 140 der Kolben-Zylinder-Anordnung 105 zugeordnet.

Am oberen Endbereich des beweglichen Hülsenteils 118 ist eine erste Scheibe 125 befestigt. Über elastische Verbindungselemente 126 ist an der ersten Scheibe 125 eine darüberliegende zweite Scheibe 127 befestigt. Auf der zweiten Scheibe 127 ist eine Schwingvorrichtung 128 und darüber eine kegelförmige Abdeckung 129 montiert. Aussen um die zweite Scheibe 127 verläuft der obere Randbereich einer ringförmigen Blähdichtung 130, die mit dem abzuhebenden Verschliessorgan 163 zusammenwirkt und die Eintrittsöffnung 104 dicht verschliessbar macht. Die von unten her zugängliche Aussenkontur des von der Auslassvorrichtung betätigbaren Verschliessorganes 163 ist an die Form der Abdeckung 129 angepasst. Es versteht sich von selbst, dass auch die Abdeckung 129 direkt das Verschliessorgan 163 bilden könnte, wenn die Auslassvorrichtung als Teil eines Silos ausgebildet ist. Im abgehobenen Zustand kann das Verschliessorgan 163 von der Schwingvorrichtung 128 in Schwingung versetzt werden. Dabei ist die Verformbarkeit der Verbindungselemente 126 so gewählt, dass ein genügend starkes Schwingen des Verschliessorganes 163, bzw. der Abdeckung 129, auch mit der im wesentlichen festen ersten Scheibe 125 möglich ist. Um die Kolben-Zylinder-Anordnung 105 gegen durchströmendes Schüttgut dicht abzutrennen, ist eine elastische Abdichtung 131 und gegebenenfalls noch ein innerer Abdeckbalg 131a angeordnet.

Die Halterung der Kolben-Zylinder-Anordnung 105 erfolgt zumindest teilweise mittels vier rohrförmigen Streben 132. Diese Streben 132 sind gleichzeitig als Fluidleitungen ausgebildet. An eine Fluid-Zuleitung wird eine Verbindungsleitung 136 zur Schwingvorrichtung 128 angeschlossen. Die Druckbeaufschlagung der Blähdichtung 130 erfolgt auch durch eine Strebe 132. Die zentrale Achse der Kolben-Zylinder-Einheit 105 bildet eine Betätigungsachse 174. Durch das Zentrum der Austrittsöffnung 162 verläuft eine vertikale Zentrumsachse 175.

Weil zwischen dem Stellrahmen 164 des Behälters 161 und den Rahmenführungen 170 des zweiten Gestelles 168 etwas Spiel vorgesehen werden muss, kann nicht gewährleistet werden, dass die Betätigungsachse 174 mit der vertikalen Zentrumsachse 175 der Austragsöffnung 162 zusammenfällt. Zudem ist die Lage der Austrittsöffnung 162 relativ zum Stellrahmen 164, aufgrund von Mass-Toleranzen der Behälter, nicht bei jedem Behälter gleich. Die kegelförmige Abdeckung 129 trifft somit, wie in Fig. 2 dargestellt, meist nicht zentrisch auf den kegelförmigen Kontaktbereich des Verschliessorganes 163. Um beim Abheben ein Kippen des Verschliessorganes 163 zu verhindern und einen rotationssymmetrischen, ringförmigen Austrittsbereich zu gewährleisten, wird zwischen der ersten 125 und der zweiten Scheibe 127 eine Verschiebeeinrichtung 176 angeordnet, die eine Verschiebung der Abdeckung 129 quer zur Betätigungsachse 174 ermöglicht. Die Verschiebung soll vor oder gegebenenfalls beim Anheben des Verschliessorganes, vorzugsweise im Sinne einer selbsttätigen Zentrierung erfolgen. Dabei sollen beispielsweise die aneinander angepassten Kontaktflächen der Abdeckung 129 und des Verschliessorganes 163 als zusammenwirkende Zentrierflächen verwendet werden.

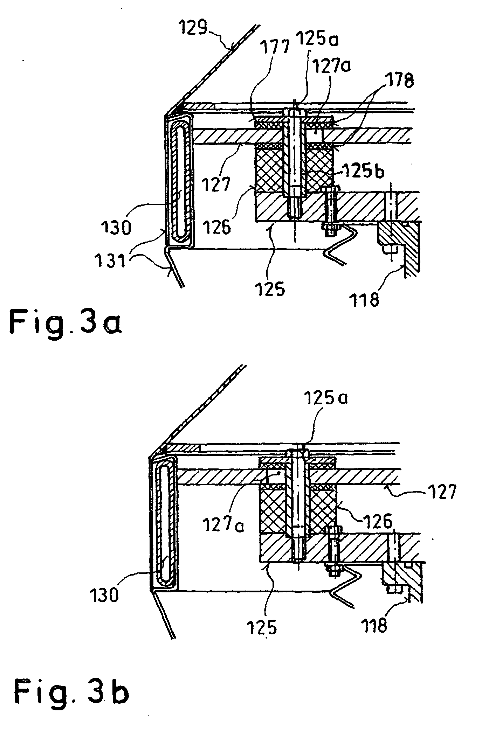

Die Verschiebeeinrichtung 176 umfasst gemäss den Fig. 3a und 3b vorzugsweise mindestens eine, vorzugsweise aber drei im wesentlichen gleichmässig über den Umfang verteilte, an der ersten Scheibe 125 festgesetzte, nach oben stehende Schrauben 125a, die insbesondere je in einer Hülse 125b angeordnet sind. Jede Schraube 125a erstreckt sich, vorzugsweise in einer Bohrung durch ein elastisches Verbindungselement 126 und einer Durchtrittsbohrung 127a durch die zweite Scheibe 127, über die zweite Scheibe 127 hinaus. Zwischen dem Kopf der Schraube 125a und der Oberseite der zweiten Scheibe 127 wird zumindest eine Gleitscheibe 178 und gegebenenfalls auch eine zusätzliche Haltescheibe 177 angeordnet. Zwischen dem elastischen Verbindungselement 126 und der zweiten Scheibe 127 ist auch eine Gleitscheibe 178 angeordnet. Diese Anordnung ermöglicht sowohl ein seitliches Verschieben der zweiten Scheibe 127 relativ zur ersten Scheibe 125, als auch ein Schwingen bzw. Vibrieren der Abdeckung 129 relativ zur ersten Scheibe 125.

Um zu gewährleisten, dass die Blähdichtung 130 aufgeblasen wird, wenn das Verschliessorgan 163 an der Abdeckung 129 anliegt, sind gegebenenfalls an der Abdeckung 129 und an am Verschliessorgan 163 Koppelungselemente ausgebildet, die in gegenseitigem Kontakt ein Ventil betätigbar machen. In der dargestellten Ausführungsform steht von der Abdeckung 129 in Richtung der Achsen 174, 175 ein erstes Koppelungselement 180 vor, das in ein zweites Koppelungselement 181 des Verschliessorganes 163 einsteckbar ist. Anstelle der Betätigung der Blähdichtung 130, können die Koppelungselemente 180, 181 im eingesteckten Zustand beispielsweise mittels einer pneumatischen Betätigung eine reibungs- oder formschlüssige Verbindung zwischen einander erzielbar machen. Es versteht sich von selbst, dass die Koppelungselemente 180, 181 so ausgebildet sind, dass sie auch bei einer nötigen Zentrierungsbewegung der Abdeckung 129 richtig ineinander greifen. Die zusammenwirkenden Koppelungselemente können auch zum Überprüfen des korrekten Sitzes der Abdeckung 129 am Verschliessorgan 163 verwendet werden.

Durch die Zentrierbewegung kompensiert die Abdeckung die möglichen Abweichungen zwischen den Achsen 174 und 175, so dass die Betätigung des Verschliessorganes 163 im wesentlichen zentrisch entlang der Zentrumsachse 175 erfolgt. Beim Ausströmen von Schüttgut kann sich das Verschliessorgan 163 aufgrund dynamischer Kräfte etwas quer zur Zentrumsachse 175 bewegen, was auch bei inhomogenen Schüttgutkonzentrationen im Bereich über dem Verschliessorgan 163 zu einem möglichst gleichmässigen Schüttgutfluss führt. Wenn nun das Verschliessorgan 163 zu Beginn eines Verschlussschrittes zur Zentrumsachse 175 etwas versetzt ist, so wird das Verschliessorgan 163 an der konisch zusammenlaufenden Behälterberandung über der Austrittsöffnung 162 zentriert und gelangt beim Schliessen in die richtige Verschlusslage. Ein Schiefstellen des Verschliessorganes 163 und damit ein unvollständiges Verschliessen der Austrittsöffnung 163 wird dadurch verhindert, dass die Achse der Abdeckung 129 und somit die Achse des Verschliessorganes 163 im wesentlichen immer parallel zur Betätigungsachse 174 und somit auch parallel zur Zentrumsachse 175 verläuft. Die Verschiebeeinrichtung ermöglicht die vorteilhaften Querbewegungen des Verschliessorganes 163 und verhindert unerwünschte Kippbewegungen.

Wenn die Abdeckung 129 vom Verschliessorgan 163 gelöst und vollständig nach unten in ihre Verschliesslage bewegt wird, führen die Zentrierkräfte des elastischen Lippenbereiches 103a zu einer Rückstellung der Abdeckung 129 bzw. des Hubkegels auf die Betätigungsachse 174.

Es versteht sich von selbst, dass die Verschiebeeinrichtung auch andere dem Fachmann bekannte Führungsanordnungen aufweisen kann. Diese Führungsanordnungen müssen lediglich Querbewegungen ermöglichen und Kippbewegungen verhindern.

Die erfindungsgemässe Betätigungsvorrichtung ist nicht auf die Verwendung zum Auslassen von Schüttgut beschränkt, sondern kann auch vor dem Befüllen eines Behälters verwendet werden, um das Verschliessorgan 163 in die richtige Schliessposition zu bewegen. Wenn eine Betätigungsvorrichtung an einer Befüllstation angeordnet wird, so kann auf einen ringförmigen Durchlasskanal für das Schüttgut verzichtet werden. Bei einem auf die Befüllstation gesetzten Behälter wird vor dem Befüllen die Abdeckung 129 von unten gegen das Verschliessorgan 163 bewegt. Im zentrierenden Kontakt zwischen der Abdeckung und dem Verschliessorgan wird die Abdeckung 129 auf das Verschliessorgan zentriert. Anschliessend wird das Verschliessorgan abgehoben und dann zum richtigen Schliessen von der Abdeckung 129 nach unten gezogen. Mit dieser zentrierenden Schliessbewegung wird gewährleistet, dass das Verschliessorgan die Austrittsöffnung sicher und richtig verschliesst, bevor das Befüllen erfolgt.

## Patentansprüche

1. Betätigungsvorrichtung zum Betätigen eines Verschliessorganes (163) einer Behälteröffnung, mit einem Gehäuseteil (102) und einer darin gelagerten Hubvorrichtung (105) zum Heben und Senken des Verschliessorganes (163) in Kontakt mit einem Betätigungsende der Hubvorrichtung, **dadurch gekennzeichnet, dass** die Betätigungsvorrichtung eine Verschiebeeinrichtung, die eine Verschiebung des Betätigungsendes quer zu einer zentralen Betätigungsachse der Hubvorrichtung ermöglicht, und mindestens eine Zentrierfläche, zum zentrierenden Anpressen des Betätigungsendes an das Verschliessorgan, umfasst.

2. Betätigungsvorrichtung nach Anspruch 1, **dadurch gekennzeichnet, dass** die Verschiebeeinrichtung als Gleitführungsvorrichtung (127, 127a, 178,125a) ausgebildet ist.

3. Betätigungsvorrichtung nach Anspruch 1 oder 2, **dadurch gekennzeichnet, dass** die mindestens eine Zentrierfläche als kegelförmige Abdeckung (129) an eine entsprechende Kontaktfläche des Verschliessorganes (163) angepasst ist.

## Claims

1. Actuation device for actuating a closure member (163) of a container's opening, comprising a housing portion (102) and lifting means (105) supported therein for lifting and lowering said closure member (163) being in contact with an actuation extremity of said lifting device, **characterised in that** said actuation device comprises a shifting device that enables shifting of said actuation extremity transversely to a central actuation axis of said lifting means, and at least one centering surface for pressing said actuation extremity in a centering manner against said dosure member.

2. Actuation device according to claim 1, **characterised in that** said shifting device is formed as a sliding guide means (127, 127a, 178, 125a).

3. Actuation device according to claim 1 or 2, **characterised in that** said at least one centering surface is adapted as a conus-shaped cover (129) to a corresponding contact surface of said closure member (163).

## Revendications

1. Dispositif de commande pour actionner un organe de fermeture (163) d'un orifice de récipient, comprenant une partie de boîtier (102) et un moyens de levage (105) y logé pour enlever et abaisser l'organe de fermeture (163) étant en contacte avec une extrémité de commande du moyens de levage, **caractérisé en ce que** le dispositif de commande comprend un dispositif de glissement, qui permet un glissement de l'extrémité de commande transversalement à l'axe de commande centrale du moyens de levage, et au moins une surface de centrage pour presser, en centrant, l'extrémité de commande contre l'organe de fermeture.

2. Dispositif de commande selon la revendication 1, **caractérisé en ce que** le dispositif de glissement est formé comme guidage à glissement (127, 127a, 178, 125a).

3. Dispositif de commande selon la revendication 1 ou 2, **caractérisé en ce que** ladite au moins une surface de centrage est adaptée comme couverture conique (129) à une surface de contacte correspondante de l'organe de fermeture (163).
